# EUROPÄISCHE PATENTSCHRIFT

(11) **EP 2 495 815 B1**
(45) Veröffentlichungstag und Bekanntmachung des Hinweises auf die Patenterteilung: **24.12.2014**
(21) Anmeldenummer: 12157646.6
(22) Anmeldetag: 01.03.2012
(51) Int. Cl.: H01R 4/24, H01R 13/66, H01R 13/68, H01R 107/00, H04Q 1/14, H01R 13/432

(54) **Kontaktfeder einer Verteilereinrichtung einer Telekommunikationsanlage**
Contact spring of a distributor device of a telecommunications assembly
Ressort de contact d'un dispositif de répartition d'une installation de télécommunication

(30) Priorität: 04.03.2011 DE 202011003533 U
(43) Veröffentlichungstag der Anmeldung: 05.09.2012
(73) Patentinhaber: CCS Technology, Inc., Wilmington, DE 19803 (US)
(72) Erfinder: Kittler, Lars, Dipl.-Ing., 58239 Schwerte (DE); Breuer-Heckel, Mike, Dipl.-Ing., 44143 Dortmund (DE)
(74) Vertreter: Sturm, Christoph

(56) Entgegenhaltungen:
- DE-C1- 4 423 339
- GB-A- 2 293 696
- US-A- 4 113 341

## Beschreibung

Die Erfindung betrifft eine Kontaktfeder einer Verteilereinrichtung einer Telekommunikationsanlage nach dem Oberbegriff des Anspruchs 1.

In der Telekommunikationstechnik kommen als Verteilerleisten ausgebildete Verteilereinrichtung zum Einsatz, um Kabeladern sogenannter Teilnehmerkabel und/oder Systemkabel und/oder Rangierkabel anzuschließen. Aus dem Produktkatalog "Anschluss- und Verteilersysteme, Ausgabe 1, Corning Cable Systems GmbH & Co. KG, Jahr 2000" sind unterschiedliche Verteilerleisten von Telekommunikationsanlagen bekannt, wobei sämtliche Verteilerleisten mehrere Kontaktfedern aufweisen. Die Kontaktfedern einer Verteilereinrichtung bilden als IDC-Schneidklemmkontakte ausgebildete Anschlusselemente für den Anschluss von Kabeladern eines Teilnehmerkabels und/oder Systemkabels und/oder Rangierkabels aus.

Aus der DE 20 2008 005 934 U1 sind Kontaktfedern einer als Durchschaltleiste ausgebildeten Verteilerleiste bzw. Verteilereinrichtung einer Telekommunikationsanlage gemäß dem Oberbegriff des Anspruchs 1 bekannt. So zeigt dieser Stand der Technik Kontaktfedern, die an sich gegenüberliegenden Enden der jeweiligen Kontaktfeder als IDC-Schneidklemmkontakte ausgebildete Anschlusselemente für den Anschluss von Kabeladern aufweisen. Hierbei sind die an den sich gegenüberliegenden Enden ausgebildeten Anschlusselemente identisch ausgeführt.

Weiterhin ist es aus der DE 20 2008 005 934 U1 bekannt, dass in einem mittleren Bereich der Kontaktfeder, der zwischen den beiden Anschlusselementen positioniert ist, eine Kontaktlasche ausgestellt ist, die dem Anschluss einer Einrichtung, wie zum Beispiel einer Überspannungsschutzeinrichtung oder Testeinrichtung oder Messeinrichtung, dient.

Weiterer Stand der Technik ist aus der DE 44 23 339 C1, GB 2 293 696 A und US 4 113 341 A bekannt.

Zum Anschluss einer solchen Einrichtung, zum Beispiel einer Überspannungsschutzeinrichtung, an eine ausgestellte Kontaktlasche einer Kontaktfeder ist ein Abschnitt der anzuschließenden Einrichtung zwischen der Kontaktlasche der jeweiligen Kontaktfeder und einem Kunststoffgehäuse der Verteilereinrichtung, in welcher die jeweilige Kontaktfeder aufgenommen ist, geklemmt.

Bislang bereitet es Schwierigkeiten, unter allen Betriebsbedingungen, insbesondere beim Abfließen hoher elektrischer Ströme zum Abbau einer elektrischen Überspannung, eine sichere Kontaktierung zwischen der Kontaktlasche bzw. der Kontaktfeder und der an derselben anzuschließenden Einrichtung, insbesondere der Überspannungsschutzeinrichtung, zu gewährleisten. Es besteht daher Bedarf an einer Kontaktfeder, welche eine verbesserte Kontaktierung und damit einen verbesserten Anschluss einer Einrichtung, zum Beispiel einer Überspannungsschutzeinrichtung, an der Kontaktfeder ermöglicht.

Hiervon ausgehend liegt der vorliegenden Erfindung das Problem zu Grunde, eine neuartige Kontaktfeder einer Verteilereinrichtung einer Telekommunikationsanlage zu schaffen.

Dieses Problem wird durch eine Kontaktfeder gemäß Anspruch 1 gelöst. Hiernach ist benachbart zu mindestens einer ausgestellten Kontaktlasche ein Kontaktbügel ausgebildet, der die jeweilige Kontaktlasche zumindest teilweise umgibt und mit derselben einen Aufnahme- und Kontaktbereich für einen Abschnitt der mit der jeweiligen Kontaktlasche und/oder dem jeweiligen Kontaktbügel zu kontaktierenden Einrichtung ausbildet.

Die erfindungsgemäße Kontaktfeder verfügt über mindestens eine im mittleren Bereich der Kontaktfeder ausgebildete Kontaktlasche mit einem benachbart zur Kontaktlasche ausgebildeten Kontaktbügel, der die jeweilige Kontaktlasche zumindest teilweise umgibt und mit derselben einen Aufnahme- und Kontaktbereich für einen Abschnitt der mit der Kontaktfeder zu kontaktierenden Einrichtung ausbildet.

In einem solchen Aufnahme- und Kontaktbereich, der durch eine Kontaktlasche und einen Kontaktbügel der Kontaktfeder ausgebildet ist, kann in allen Betriebsbedingungen, insbesondere auch bei hohen elektrischen Überspannungen und damit beim Fließen hoher elektrischer Ströme, eine sichere Kontaktierung zwischen der Kontaktfeder und der mit derselben zu kontaktierenden Einrichtung, insbesondere einer Überspannungsschutzeinrichtung, gewährleistet werden. Es besteht keine Gefahr, dass im Betrieb der Kontaktfeder und damit der Verteilereinrichtung, welche die Kontaktfeder umfasst, die Kontaktierung zwischen der Kontaktfeder und der mit derselben zu kontaktierenden Einrichtung unbeabsichtigt gelöst wird.

Insbesondere kann so bei Anliegen einer hohen Überspannung und damit bei großen abzuleitenden elektrischen Strömen stets eine sichere Kontaktierung einer Schutzeinrichtung mit der Kontaktfeder gewährleistet werden, um so vor Überspannung zu schützende Baugruppen der Verteilereinrichtung sicher vor einer Beschädigung durch elektrische Überspannung zu schützen.

Vorzugsweise ist der jeweilige Aufnahme- und Kontaktbereich von der jeweiligen Kontaktlasche und einem in etwa parallel zum mittleren Bereich der Kontaktfeder verlaufenden Klemmabschnitt des jeweiligen Kontaktbügels definiert, wobei der Klemmabschnitt des jeweiligen Kontaktbügels über seitliche Verbindungsabschnitte, die in etwa senkrecht zum mittleren Bereich der Kontaktfeder verlaufen, beidseitig mit dem mittleren Bereich verbunden ist.

Diese Ausgestaltung des Kontaktbügels ist besonders einfach und besonders bevorzugt. Der Kontaktbügel ist beidseitig an den mittleren Bereich der Kontaktfeder angebunden, sodass eine Relativposition des in etwa parallel zum mittleren Bereich der Kontaktfeder verlaufenden Klemmabschnitts des Kontaktbügels relativ zur Kontaktlasche unverändert bleibt. Somit wird stets eine sichere Kontaktierung der mit der Kontaktlasche zu kontaktierenden Einrichtung zur Kontaktlasche und/oder zum Kontaktbügel, nämlich zum Klemmabschnitt desselben, gewährleistet.

Nach einer vorteilhaften Weiterbildung greift die jeweilige Kontaktlasche mit einem Ende am mittleren Bereich der Kontaktfeder an, wobei die jeweilige Kontaktlasche ausgehend von diesem Ende schräg gegenüber dem mittleren Bereich der Kontaktfeder ausgestellt ist, und wobei ein gegenüberliegendes, freies und federelastisch verformbares Ende der jeweiligen Kontaktlasche zusammen mit dem Kontaktbügel den jeweiligen Aufnahme- und Kontaktbereich definiert. Diese Ausgestaltung gewährleistet einerseits ein einfaches Einführen eines Abschnitts einer mit einer Kontaktlasche und/oder einem Kontaktbügel zu kontaktierenden Einrichtung in den von der Kontaktlasche und dem Kontaktbügel ausgebildeten Aufnahme- und Kontaktbereich, andererseits wird in allen Betriebszuständen eine sichere Kontaktierung der Einrichtung mit der Kontaktlasche und/oder dem Kontaktbügel gewährleistet.

Vorzugsweise sind das am ersten Ende der Kontaktfeder ausgebildete erste Anschlusselement und das am zweiten Ende der Kontaktfeder ausgebildete zweite Anschlusselement jeweils als IDC-Schneidklemmkontakte ausgeführt, die sich hinsichtlich der Ausführung Ihrer IDC-Klemmschenkel unterscheiden können. Dann, wenn die Kontaktfeder an ihren gegenüberliegenden Enden unterschiedlich ausgebildete IDC-Schneidklemmkontakte aufweist, kann dieselbe unter Minimierung des von derselben benötigten Bauraums optimal an die Art, insbesondere den Durchmesser, der zu kontaktierenden Kabeladern angepasst werden.

Vorzugsweise umfasst die Kontaktfeder zwei Kontaktlaschen, wobei insbesondere ausschließlich benachbart zu einer Kontaktlasche ein Kontaktbügel ausgebildet ist, nämlich benachbart zu einer Kontaktlasche, die dem Anschluss einer Überspannungsschutzeinrichtung dient. Dann, wenn die Kontaktfeder im mittleren Bereich zwei Kontaktlaschen aufweist, können zwei Einrichtungen mit der Kontaktfeder kontaktiert werden, nämlich jeweils eine Einrichtung über jeweils eine Kontaktlasche der Kontaktfeder. In diesem Fall ist es dann möglich, über die erste Kontaktlasche eine Überspannungsschutzeinrichtung an die Kontaktfeder anzuschließen bzw. zu kontaktieren, und über die zweite Kontaktlasche eine Testeinrichtung oder Messeinrichtung oder Umschalteinrichtung anzuschließen.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine perspektivische Ansicht einer ersten erfindungsgemäßen Kontaktfeder;
- Fig. 2: eine Seitenansicht der Kontaktfeder der Fig. 1;
- Fig.3: eine perspektivische Ansicht einer zweiten erfindungsgemäßen Kontaktfeder;
- Fig. 4: eine Seitenansicht der Kontaktfeder der Fig. 3;
- Fig.5: eine perspektivische Ansicht einer dritten erfindungsgemäßen Kontaktfeder ;
- Fig. 6: eine Seitenansicht der Kontaktfeder der Fig. 5;
- Fig.7: eine perspektivische Ansicht einer vierten erfindungsgemäßen Kontaktfeder ;
- Fig. 8: eine Seitenansicht der Kontaktfeder der Fig. 7;
- Fig.9: eine perspektivische Ansicht einer fünften Kontaktfeder ;
- Fig. 10: eine Seitenansicht der Kontaktfeder der Fig. 9;
- Fig. 11: eine perspektivische Ansicht einer sechsten Kontaktfeder ;
- Fig. 12: eine Seitenansicht der Kontaktfeder der Fig. 11;
- Fig. 13: eine perspektivische Ansicht einer siebten Kontaktfeder ; und
- Fig. 14: eine Seitenansicht der Kontaktfeder der Fig. 13.

Die hier vorliegende Erfindung betrifft das Gebiet von Verteilereinrichtungen von Telekommunikationsanlagen. Der grundsätzliche Aufbau solcher Verteilereinrichtungen, die zum Beispiel als eine Verteilerleiste ausgeführt sein können, ist dem hier angesprochenen Fachmann geläufig und bedarf keiner näheren Erläuterung.

An dieser Stelle sei lediglich darauf hingewiesen, dass eine zum Beispiel als Verteilerleiste ausgebildete Verteilereinrichtung einer Telekommunikationsanlage über ein Gehäuse aus Kunststoff verfügt, in welchem mehrere Kontaktfedern aus Metall aufgenommen sind, die dem Anschließen von Kabeladern eines Teilnehmerkabels und/oder Systemkabels und/oder Rangierkabels dienen.

Die hier vorliegende Erfindung betrifft eine neuartige Ausgestaltung von Kontaktfedern einer solchen Verteilereinrichtung einer Telekommunikationsanlage.

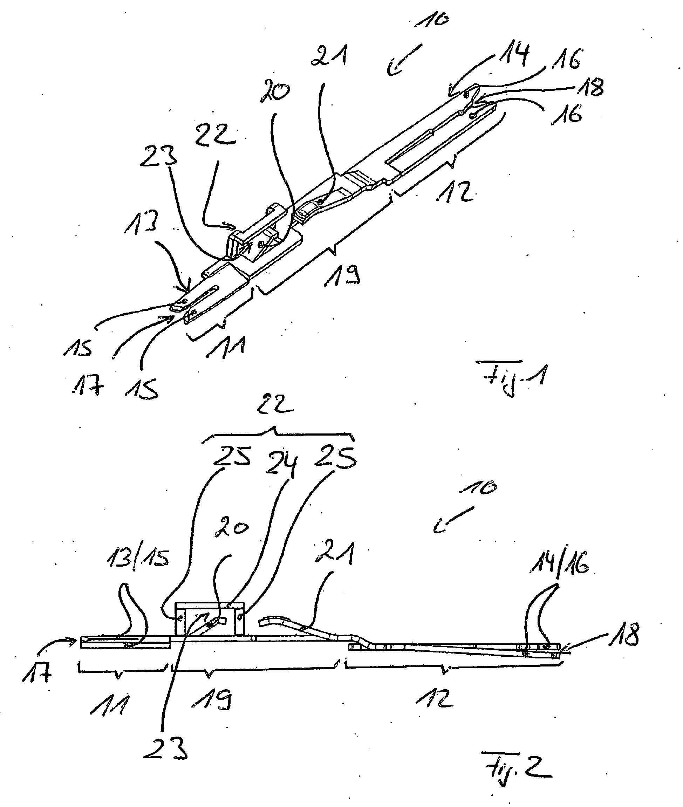

Fig. 1 und 2 zeigen unterschiedliche Ansichten eines ersten Ausführungsbeispiels einer erfindungsgemäßen Kontaktfeder 10 einer Verteilereinrichtung einer Telekommunikationsanlage.

Die Kontaktfeder 10 der Fig. 1 und 2 verfügt über zwei sich gegenüberliegende Enden 11 und 12, wobei an einem ersten Ende 11 der Kontaktfeder 10 ein erstes Anschlusselement 13 und an einem gegenüberliegenden zweiten Ende 12 der Kontaktfeder 10 ein zweites Anschlusselement 14 ausgebildet ist, nämlich derart, dass die beiden Anschlusselemente 13 und 14 jeweils als IDC-Schneidklemmkontakte ausgeführt sind. So dient das am ersten Ende 11 der Kontaktfeder 10 ausgebildete, erste Anschlusselement 13 insbesondere dem Anschluss ankommender oder abgehender Kabeladern eines Systemkabels. Das am gegenüberliegenden, zweiten Ende 12 ausgebildete, zweite Anschlusselement 14 dient insbesondere dem Anschluss abgehender oder ankommender Kabeladern eines Rangierkabels oder eines Teilnehmerkabel.

Wie am besten Fig. 1 entnommen werden kann, sind beim Ausführungsbeispiel der Fig. 1 und 2 die an den sich gegenüberliegenden Enden 11 und 12 ausgebildeten Anschlusselemente 13 und 14, die jeweils als IDC-Schneidklemmkontakte ausgeführt sind, hinsichtlich der Ausführung ihrer IDC-Klemmschenkel 15 bzw. 16 unterschiedlich ausgeführt. So umfasst jedes der IDC-Klemmkontakte 13 bzw. 14 jeweils zwei IDC-Klemmschenkel 15 bzw. 16, die gemeinsam einen Kontaktschlitz 17 bzw. 18 zur Aufnahme und damit Kontaktierung einer Kabelader dienen. Dabei verfügen gemäß Fig. 1 die IDC-Klemmschenkel 15 des Anschlusselements 13 über eine geringere Länge als die IDC-Klemmschenkel 16 des Anschlusselements 14. Demnach sind die IDC-Klemmschenkel 15 des ersten Anschlusselements 13 und die IDC-Klemmschenkel 16 des zweiten Anschlusselements 14 unterschiedlich lang ausgeführt.

Ein weiterer Unterschied zwischen den IDC-Klemmschenkeln 15 des ersten Anschlusselements 13 und den IDC-Klemmschenkeln 16 des zweiten Anschlusselements 14 besteht darin, dass dieselben jeweils unterschiedlich relativ zueinander gespreizt sowie jeweils unterschiedlich relativ zu einem mittleren Bereich 19 der Kontaktfeder 10 abgewinkelt sind.

So kann Fig. 1 entnommen werden, dass die IDC-Klemmschenkel 15 des ersten Anschlusselements 13 gegenüber dem mittleren Bereich 19 der Kontaktfeder 10 um einen definierten Winkel geneigt sind, wohingegen die IDC-Kontaktschenkel 16 des Anschlusselements 14 gegenüber dem mittleren Abschnitt 19 nicht geneigt sind. Vielmehr sind, wie am besten Fig. 2 entnommen werden kann, die IDC-Kontaktschenkel 16 des zweiten Anschlusselements 14 horizontal zueinander gebogen und demnach horizontal relativ zueinander gespreizt. Diese horizontale Spreizung ist im Bereich der IDC-Klemmschenkel 15 des ersten Anschlusselements 13 nicht vorhanden.

Im Ausführungsbeispiel der Fig. 1 und 2 sind im mittleren Bereich 19 der Kontaktfeder 10, der zwischen den beiden Anschlusselementen 13 und 14 und damit zwischen den beiden Enden 11 und 12 der Kontaktfeder ausgebildet ist, zwei Kontaktlaschen 20 und 21 ausgebildet bzw. ausgestellt, wobei beide Kontaktlaschen 20 und 21 jeweils zur gleichen Seite der Kontaktfeder 10 bzw. des mittleren Bereichs 19 derselben ausgestellt sind. An die erste Kontaktlasche 20 kann eine erste Einrichtung, insbesondere eine Überspannungsschutzeinrichtung, angeschlossen bzw. mit derselben kontaktiert werden. An die zweite Kontaktlasche 21 kann eine zweite Einrichtung, so zum Beispiel eine Testeinrichtung oder Messeinrichtung oder Umschalteinrichtung, angeschlossen bzw. mit derselben kontaktiert werden. Dann, wenn die Kontaktfeder in einem Gehäuse einer Verteilereinrichtung aufgenommen ist, erfolgt der Anschluss bzw. die Kontaktierung dieser beiden Einrichtungen mit den beiden Kontaktlaschen 20 und 21 ausgehend von unterschiedlichen Seiten der Verteilereinrichtung.

Im Ausführungsbeispiel der Fig. 1 und 2 ist einer der beiden Kontaktlaschen, nämlich der Kontaktlasche 20, ein Kontaktbügel 22 zugeordnet, der am mittleren Bereich 19 der Kontaktfeder 10 benachbart zur ausgestellten Kontaktlasche 20 ausgebildet ist. Dieser Kontaktbügel 22 umgibt die Kontaktlasche 20 zumindest teilweise und bildet mit derselben einen Aufnahme- und Kontaktbereich 23 für einen Abschnitt der mit der Kontaktlasche 20 und/oder dem Kontaktbügel 22 zu kontaktierenden Einrichtung aus.

So kann insbesondere Fig. 2 entnommen werden, dass der jeweilige Aufnahme- und Kontaktbereich 23 für den Abschnitt der mit der Kontaktlasche 20 und/oder dem Kontaktbügel 22 zu kontaktierenden Einrichtung einerseits von der Kontaktlasche 20 und andererseits von einem in etwa parallel zum mittleren Bereich 19 der Kontaktfeder 10 verlaufenden Klemmabschnitt 24 des Kontaktbügels 22 definiert ist, wobei der Klemmabschnitt 24 des Kontaktbügels 22 über seitliche Verbindungsabschnitte 25, die in etwa senkrecht zum mittleren Bereich 19 der Kontaktfeder 10 und damit in etwa senkrecht zum Kontaktierungsabschnitt 24 des Kontaktbügels 22 verlaufen, beidseitig mit dem mittleren Bereich 19 der Kontaktfeder 10 verbunden ist.

Die Kontaktlasche 20 ist mit einem Ende am mittleren Bereich 19 der Kontaktfeder 10 angebunden, wobei die Kontaktlasche 20 ausgehend von diesem Ende schräg gegenüber dem mittleren Bereich 19 der Kontaktfeder 10 ausgestellt ist, und wobei ein gegenüberliegendes, freies Ende der jeweiligen Kontaktlasche 20 zusammen mit dem Kontaktbügel 22, nämlich dem Klemmabschnitt 24 des Kontaktbügels 22, den Aufnahme- und Kontaktbereich 23 definiert. Zum Kontaktieren einer Einrichtung, zum Beispiel einer Überspannungsschutzeinrichtung, mit der Kontaktlasche 20 und/oder dem Kontaktbügel 22 wird ein Abschnitt der Einrichtung in den Aufnahme- und Kontaktbereich 23 eingeschoben, wobei hierbei die Kontaktlasche 20 federelastisch nach unten gedrückt wird und wobei bedingt durch die Federelastizität der Kontaktlasche 20 der in den Aufnahme- und Kontaktbereich 23 eingeführte Abschnitt der anzuschließenden bzw. zu kontaktierenden Einrichtung zwischen Kontaktlasche 20 und Klemmabschnitt 24 des Kontaktbügels 22 geklemmt und vorzugsweise sowohl mit der Kontaktlasche 20 als auch mit dem Klemmabschnitt 24 des Kontaktbügels 22 elektrisch leitend kontaktiert ist. In allen Betriebszuständen, so auch bei Anliegen einer hohen elektrischen Überspannung sowie bei Abfließen eines hohen elektrischen Überstroms, kann eine sichere Kontaktierung der zu kontaktierenden Einrichtung mit der Kontaktfeder 10 im Aufnahme- und Kontaktbereich 23 gewährleistet werden.

Im Ausführungsbeispiel der Fig. 1 und 2 ist ausschließlich der Kontaktlasche 20 ein Kontaktbügel 22 zugeordnet. Hierbei handelt es sich vorzugsweise um diejenige Kontaktlasche 20, die dem Anschluss einer Überspannungsschutzeinrichtung an die Kontaktfeder 10 dient. Diese Kontaktlasche 20 ist benachbart zum ersten Anschlusselement 13 und damit benachbart zum ersten Ende 11 der Kontaktfeder 10 positioniert, wohingegen die Kontaktlasche 21, der kein derartiger Kontaktbügel zugeordnet ist, von der Kontaktlasche 20 beabstandet ist und benachbart zum zweiten Ende 12 und damit zum zweiten Anschlusselement 14 am mittleren Bereich 19 der Kontaktfeder 10 ausgebildet ist. Das erste Anschlusselement 13 der Kontaktfeder 10 dient dabei insbesondere der Kontaktierung von ankommenden oder abgehenden Kabeladern eines Systemkabels. Das zweite Anschlusselement 14 dient insbesondere der Kontaktierung von ankommenden oder abgehenden Kabeladern eines Rangierkabels oder Teilnehmerkabels.

Die Kontaktfeder 10 ist einstückig ausgebildet und vollständig aus einem metallischen Werkstoff gefertigt, also im Bereich beider Anschlusselemente 13, 14, im mittleren Bereich 19, an den beiden Kontaktlaschen 20 und 21 sowie im Bereich des Kontaktbügels 22.

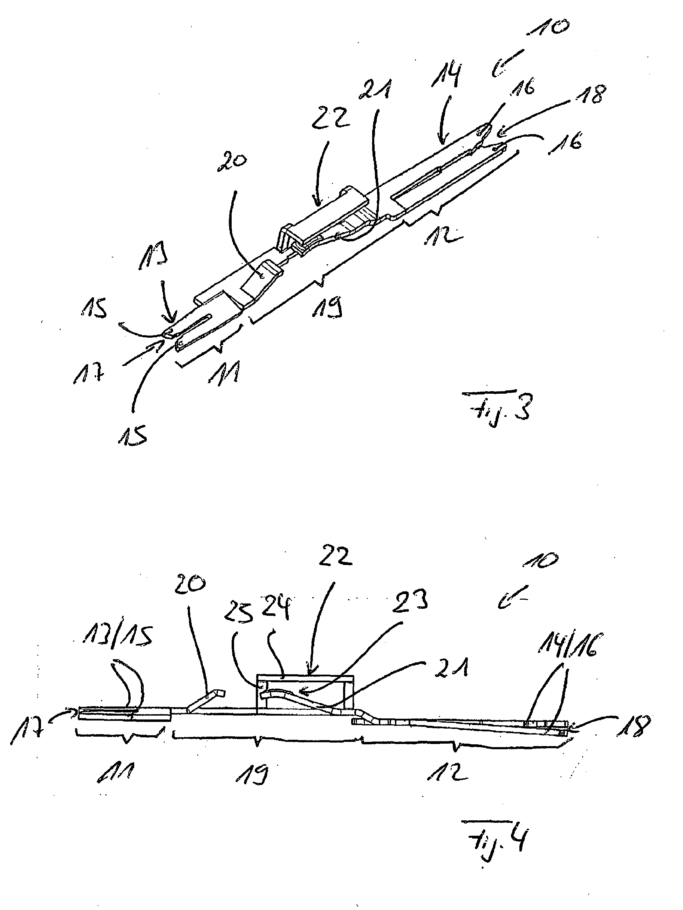

Ein zweites Ausführungsbeispiel einer erfindungsgemäßen Kontaktfeder 10 zeigen Fig. 3 und 4, wobei sich das Ausführungsbeispiel der Fig. 3 und 4 vom Ausführungsbeispiel der Fig. 1 und 2 dadurch unterscheidet, dass der Kontaktbügel 22 der Kontaktlasche 21 zugeordnet ist, die benachbart zum zweiten Ende 12 und damit zum zweiten Anschlusselement 14 am mittleren Bereich 19 der Kontaktfeder 10 ausgebildet ist. Hinsichtlich aller weiteren Details stimmt das Ausführungsbeispiel der Fig. 3 und 4 mit dem Ausführungsbeispiel der Fig. 1 und 2, sodass zur Vermeidung unnötiger Wiederholungen auf die obigen Ausführungen zum Ausführungsbeispiel der Fig. 1 und 2 verwiesen wird.

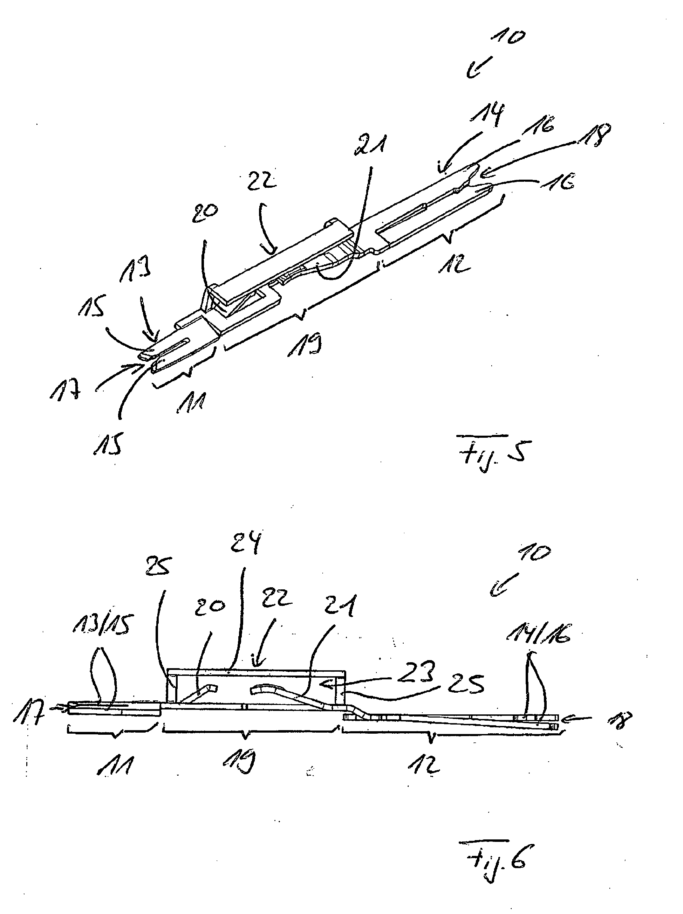

Ein drittes Ausführungsbeispiel einer erfindungsgemäßen Kontaktfeder 10 zeigen Fig. 5 und 6, wobei in Fig. 5 und 6 beiden Kontaktlaschen 20 und 21 ein gemeinsamer Kontaktbügel 22 zugeordnet ist, der sich zumindest teilweise um bzw. über beide Kontaktlaschen 20, 21 erstreckt. Ferner ist es möglich, beiden Kontaktlaschen 20 und 21 jeweils ein individuellen Kontaktbügel zuzuordnen. Hinsichtlich aller weiteren Details stimmt das Ausführungsbeispiel der Fig. 5 und 6 mit dem Ausführungsbeispiel der Fig. 1 und 2, sodass zur Vermeidung unnötiger Wiederholungen auf die obigen Ausführungen zum Ausführungsbeispiel der Fig. 1 und 2 verwiesen wird.

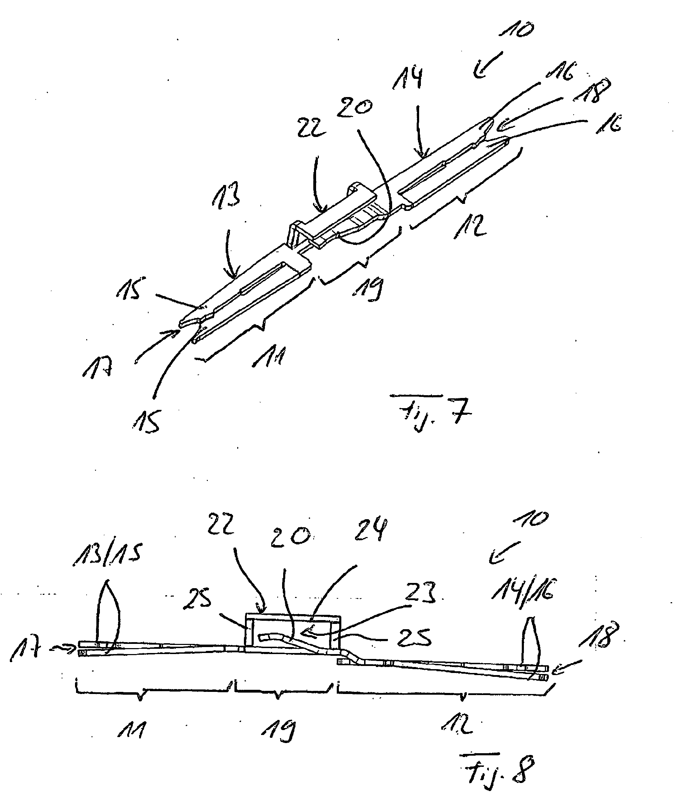

Ein viertes Ausführungsbeispiel einer erfindungsgemäßen Kontaktfeder 10 zeigen Fig. 7 und 8, wobei beim Ausführungsbeispiel der Fig. 7 und 8 im mittleren Bereich 19 der Kontaktfeder 10 ausschließlich eine einzige Kontaktlasche 20 mit einem entsprechenden Kontaktbügel 22 ausgebildet ist. In den Ausführungsbeispielen der Fig. 1 bis 6 sind die an den sich gegenüberliegenden Enden 11 und 12 ausgebildeten Anschlusselemente 13 und 14, die jeweils als IDC-Schneidklemmkontakte ausgeführt sind, jeweils unterschiedlich ausgebildet. Im Ausführungsbeispiel der Fig. 7 und 8 sind hingegen die Anschlusselemente 13 und 14 der beiden Enden 11 und 12 der Kontaktfeder 10 hinsichtlich der Ausgestaltung ihrer IDC-Klemmschenkel 15, 16 identisch ausgeführt.

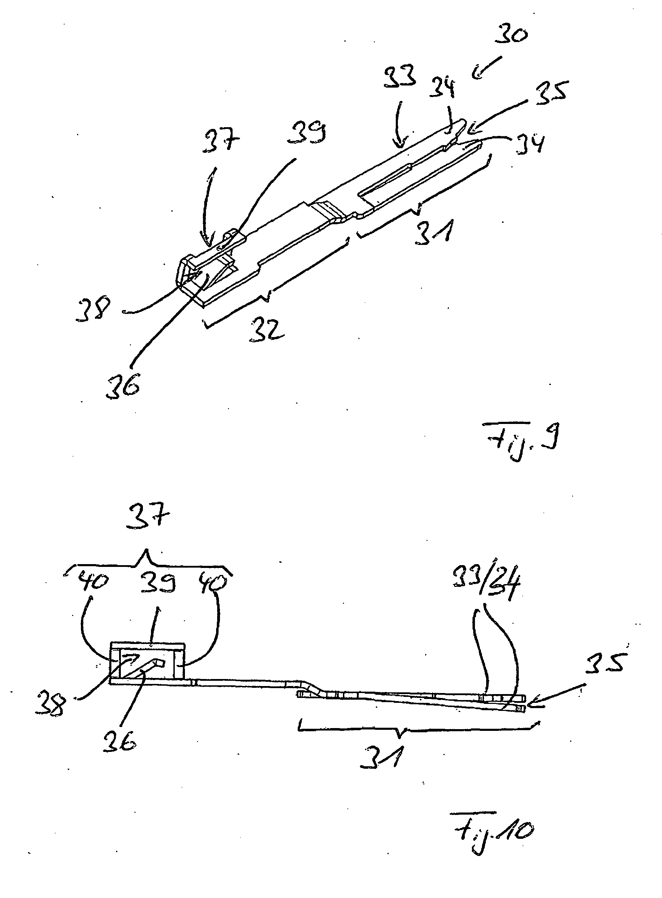

In den Fig. 9 bis 14 sind drei weitere Kontaktfedern 30 gezeigt. Bei diesen Kontaktfedern 30 ist jeweils an einem ersten Ende 31 der Kontaktfeder 30 ein als IDC-Schneidklemmkontakt ausgeführtes Anschlusselement 33 für den Anschluss ankommender oder abgehender Kabeladern eines Teilnehmerkabels oder Systemkabels oder Rangierkabels ausgebildet. Das als IDC-Schneidklemmkontakt ausgeführte Anschlusselement 33 verfügt dabei über IDC-Klemmschenkel 34, die einen Kontaktschlitz 35 definieren.

Bei den Kontaktfedern 30 der Fig. 9 bis 14 ist jeweils an einem zweiten Ende 32 der Kontaktfeder eine Kontaktlasche 36 für den Anschluss einer Einrichtung, insbesondere einer Überspannungsschutzeinrichtung oder einer Testeinrichtung oder einer Messeinrichtung oder einer Umschalteinrichtung oder einer Leiterplatine, ausgestellt. Benachbart zu der ausgestellten Kontaktlasche 36 ist ein Kontaktbügel 37 ausgebildet, der die jeweilige Kontaktlasche 36 zumindest teilweise umgibt und mit derselben einen Aufnahme- und Kontaktbereich 38 für einen Abschnitt der mit der Kontaktlasche 36 und/oder dem Kontaktbügel 37 zu kontaktierenden Einrichtung ausbildet. Der Aufnahme- und Kontaktbereich 38 der Kontaktfedern 30 der Fig. 9 bis 14 ist von der Kontaktlasche 36 und einem in etwa parallel zum zweiten Ende 32 der Kontaktfeder 30 verlaufenden Klemmabschnitt 39 des Kontaktbügels 37 definiert. Der Klemmabschnitt 39 des Kontaktbügels 37 ist über seitliche Verbindungsabschnitte 40, die in etwa senkrecht zum zweiten Ende 32 der Kontaktfeder 30 verlaufen, beidseitig mit dem zweiten Ende 32 der Kontaktfeder 30 verbunden. Die Kontaktlasche 36 greift mit einem Ende am zweiten Ende 32 der Kontaktfeder 30 an, wobei die Kontaktlasche 36 ausgehend von diesem Ende schräg gegenüber dem zweiten Ende der Kontaktfeder ausgestellt ist, und wobei ein gegenüberliegendes, freies Ende der Kontaktlasche 36 zusammen mit dem Kontaktbügel 37 den Aufnahme- und Kontaktbereich 38 definiert.

Die Kontaktfeder 30 der Fig. 9 bis 14 ist jeweils vollständig, also am Anschlusselement 33, an der Kontaktlasche 36 sowie an dem Kontaktbügel 37, aus einem metallischen Werkstoff gebildet. Die Kontaktfeder 30 der Fig. 9 bis 14 ist jeweils einstückig gebildet.

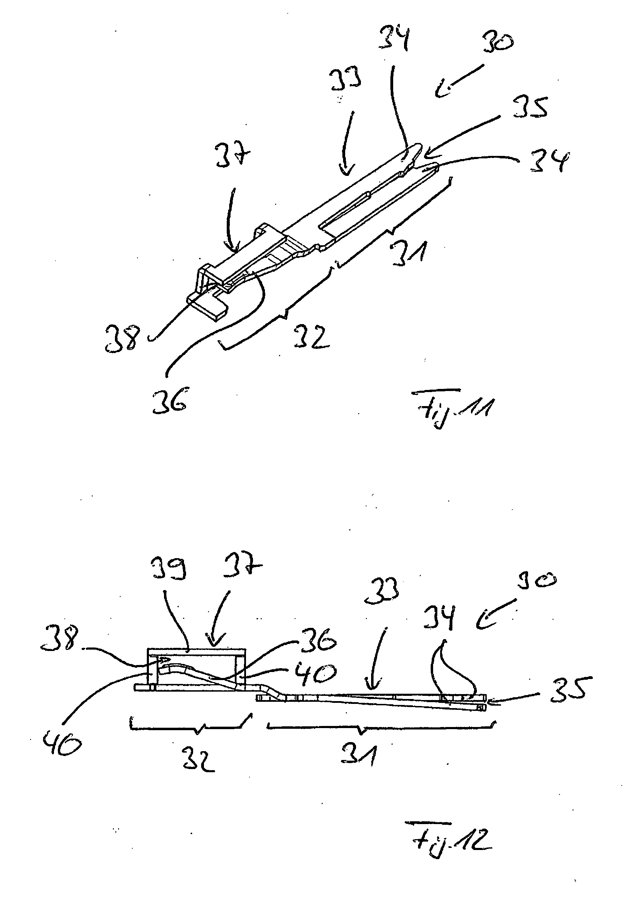

Bei der Kontaktfeder 30 der Fig. 9 und 10 wird eine mit der Kontaktlasche 36 zu kontaktierende Einrichtung, insbesondere einer Überspannungsschutzeinrichtung oder einer Testeinrichtung oder einer Messeinrichtung oder einer Umschalteinrichtung oder einer Leiterplatine, von links kommend in den Aufnahme- und Kontaktbereich 38 eingeführt. In Fig. 11 und 12 erfolgt diese Kontaktierung von rechts kommend.

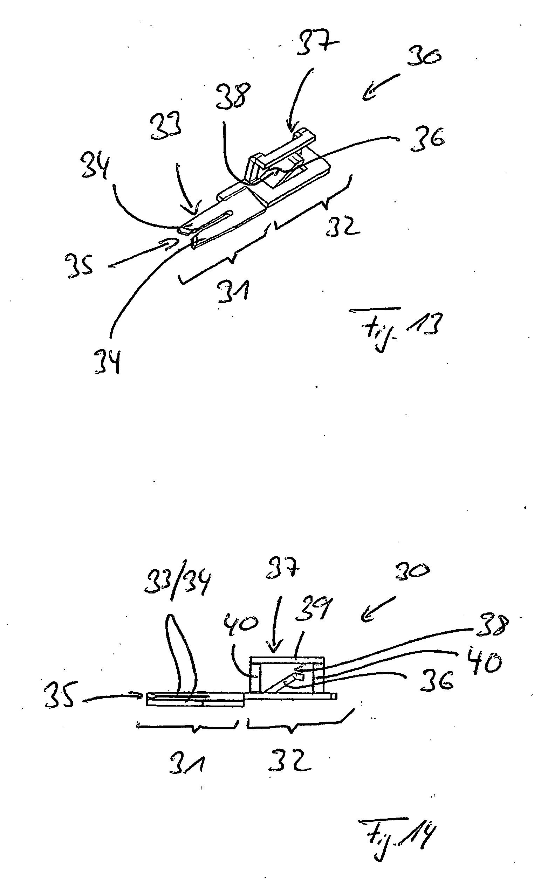

Die Kontaktfedern der Fig. 9 und 14 eignen sich insbesondere zur Verwendung an Leiterplatinen, um z. B. an Leiterbahnen der Leiterplatine unter Zwischenschaltung der Kontaktfedern 30, die über die Aufnahme- und Kontaktbereich 38 derselben auf eine Leiterplatine aufgesteckt und so mit den Leiterbahnen derselben kontaktiert sind, Kabeladern von Kabeln zu kontaktieren, nämlich dadurch, dass dann die Kabeladern in die als IDC-Klemmkontakte ausgeführten Anschlusselemente 33 der Kontaktfedern 30 eingeschoben werden.

### Bezugszeichenliste

- 10: Kontaktfeder
- 11: erstes Ende
- 12: zweites Ende
- 13: erstes Anschlusselement
- 14: zweites Anschlusselement
- 15: IDC-Klemmschenkel
- 16: IDC-Klemmschenkel
- 17: Kontaktschlitz
- 18: Kontaktschlitz
- 19: mittlerer Bereich
- 20: Kontaktlasche
- 21: Kontaktlasche
- 22: Kontaktbügel
- 23: Aufnahme- und Kontaktbereich
- 24: Klemmabschnitt
- 25: Verbindungsabschnitt

- 30: Kontaktfeder
- 31: erstes Ende
- 32: zweites Ende
- 33: Anschlusselement
- 34: IDC-Klemmschenkel
- 35: Kontaktschlitz
- 36: Kontaktlasche
- 37: Kontaktbügel
- 38: Aufnahme- und Kontaktbereich
- 39: Klemmabschnitt
- 40: Verbindungsabschnitt

## Patentansprüche

1. Kontaktfeder (10) einer Verteilereinrichtung einer Telekommunikationsanlage, mit einem an einem ersten Ende (11) der Kontaktfeder ausgebildeten, insbesondere als Schneidklemmkontakt ausgeführten, ersten Anschlusselement (13) für den Anschluss ankommender oder abgehender Kabeladern eines Teilnehmerkabels oder Systemkabels oder Rangierkabels, mit einem an einem zweiten Ende (12) der Kontaktfeder ausgebildeten, insbesondere als Schneidklemmkontakt ausgeführten, zweiten Anschlusselement (14) für den Anschluss abgehender oder ankommender Kabeladern eines Teilnehmerkabels oder Systemkabels oder Rangierkabels bilden, und mit mindestens einer in einem mittleren Bereich (19) der Kontaktfeder, der zwischen den beiden Anschlusselementen (13, 14) positioniert ist, ausgestellten Kontaktlasche (20, 21) für den Anschluss einer Einrichtung, insbesondere einer Überspannungsschutzeinrichtung oder einer Testeinrichtung oder einer Messeinrichtung oder einer Umschalteinrichtung, wobei benachbart zu mindestens einer ausgestellten Kontaktlasche (20, 21) ein Kontaktbügel (22) ausgebildet ist, der die jeweilige Kontaktlasche (20, 21) zumindest teilweise umgibt, **dadurch gekennzeichnet, dass** der jeweilige Kontaktbügel (22) mit der jeweiligen Kontaktlasche (20, 21) einen Aufnahme- und Kontaktbereich (23) für einen Abschnitt der mit der jeweiligen Kontaktlasche (20, 21) und/oder dem jeweiligen Kontaktbügel (22) zu kontaktierenden Einrichtung ausbildet.

2. Kontaktfeder nach Anspruch 1, **dadurch gekennzeichnet, dass** der jeweilige Aufnahme- und Kontaktbereich (23) von der jeweiligen Kontaktlasche (20, 21) und einem in etwa parallel zum mittleren Bereich (19) der Kontaktfeder (10) verlaufenden Klemmabschnitt (24) des jeweiligen Kontaktbügels (22) definiert ist.

3. Kontaktfeder nach Anspruch 2, **dadurch gekennzeichnet, dass** der Klemmabschnitt (24) des jeweiligen Kontaktbügels (22) über seitliche Verbindungsabschnitte (25), die in etwa senkrecht zum mittleren Bereich (19) der Kontaktfeder (10) verlaufen, beidseitig mit dem mittleren Bereich (19) verbunden ist.

4. Kontaktfeder nach einem der Ansprüche 1 bis 3, **dadurch gekennzeichnet, dass** die jeweilige Kontaktlasche (20, 21) mit einem Ende am mittleren Bereich (19) der Kontaktfeder (10) angreift, wobei die jeweilige Kontaktlasche (20, 21) ausgehend von diesem Ende schräg gegenüber dem mittleren Bereich (19) ausgestellt ist, und wobei ein gegenüberliegendes, freies Ende der jeweiligen Kontaktlasche (20, 21) zusammen mit dem Kontaktbügel (22) den jeweiligen Aufnahme- und Kontaktbereich (23) definiert.

5. Kontaktfeder nach einem der Ansprüche 1 bis 4, **dadurch gekennzeichnet, dass** das am ersten Ende (11) der Kontaktfeder ausgebildete erste Anschlusselement (13) und das am zweiten Ende (12) der Kontaktfeder ausgebildete zweite Anschlusselement (14) jeweils als IDC-Schneidklemmkontakte ausgeführt sind, die sich hinsichtlich der Ausführung ihrer IDC-Klemmschenkel (15, 16) unterscheiden, wobei vorzugweise die IDC-Klemmschenkel (15) des ersten Anschlusselements (13) und die IDC-Klemmschenkel (16) des zweiten Anschlusselements (14) unterschiedlich lang ausgebildet sind und/oder die IDC-Klemmschenkel (15) des ersten Anschlusselements und die IDC-Klemmschenkel (16) des zweiten Anschlusselements jeweils relativ zueinander unterschiedlich gespreizt und jeweils relativ zum mittlerem Bereich der Kontaktfeder unterschiedlich abgewinkelt sind.

6. Kontaktfeder nach einem der Ansprüche 1 bis 5, **gekennzeichnet durch** mehrere, insbesondere zwei, Kontaktlaschen (20, 21), wobei ausschließlich benachbart zu einer Kontaktlasche (20) ein Kontaktbügel (22) ausgebildet ist.

7. Kontaktfeder nach Anspruch 6, **dadurch gekennzeichnet, dass** eine erste Kontaktlasche (20) dem Anschluss einer Überspannungsschutzeinrichtung und eine zweite Kontaktlasche (21) dem Anschluss einer Testeinrichtung oder einer Messeinrichtung oder einer Umschalteinrichtung dient, wobei ausschließlich benachbart zur ersten Kontaktlasche (20) ein Kontaktbügel (22) ausgebildet ist, wobei vorzugsweise die beiden Kontaktlaschen (20, 21) derart voneinander beabstandet sind, dass die erste Kontaktlasche (20) benachbart zum ersten Anschlusselement (13) und die zweite Kontaktlasche (21) benachbart zum zweiten Anschlusselement (14) positioniert ist, wobei das erste Anschlusselement (13) dem Anschluss von Kabeladern eines Systemkabels und das zweite Anschlusselement (14) dem Anschluss von Kabeladern eines Rangierkabels oder eines Teilnehmerkabels dient.

8. Kontaktfeder nach einem der Ansprüche 1 bis 5, **gekennzeichnet durch** mehrere, insbesondere zwei, Kontaktlaschen (20, 21), wobei benachbart zu jeder Kontaktlaschen jeweils ein Kontaktbügel (22) ausgebildet ist oder benachbart zu den Kontaktlaschen (20, 21) ein gemeinsamer Kontaktbügel (22) ausgebildet ist.

9. Kontaktfeder nach einem der Ansprüche 1 bis 8, **dadurch gekennzeichnet, dass** dieselbe vollständig, also an beiden Anschlusselementen (13, 14), im mittleren Bereich (19), an der oder jeder Kontaktlasche (20, 21) sowie an dem oder jedem Kontaktbügel (22), aus einem metallischen Werkstoff gebildet ist.

## Claims

1. Contact spring (10) of a distribution device of a telecommunication system, with a first connection element (13), which is formed at a first end (11) of the contact spring, and is in particular in the form of an insulation displacement contact, for connecting incoming or outgoing cable cores of a subscriber cable or system cable or jumper cable, with a second connection element (14), which is formed at a second end (12) of the contact spring and in particular is in the form of an insulation displacement contact, for connecting outgoing or incoming cable cores of a subscriber cable or system cable or jumper cable and with at least one contact lug (20, 21), which protrudes in a central region (19) of the contact spring, said central region being positioned between the two connection elements (13, 14) for connecting a device, in particular an overvoltage protection device or a test device or a measuring device or a switchover device, a contact bow (22) being formed adjacent to at least one protruding contact lug (20, 21), said contact bow at least partially surrounding the respective contact lug (20, 21), **characterized in that** the respective contact bow (22) forms with the respective contact lug (20, 21) a receiving and contact region (23) for a section of the device with which contact is intended to be made using the respective contact lug (20, 21) and/or the respective contact bow (22).

2. Contact spring according to Claim 1, **characterized in that** the respective receiving and contact region (23) is defined by the respective contact lug (20, 21) and a clamping section (24) of the respective contact bow (22), said clamping section running approximately parallel to the central region (19) of the contact spring (10).

3. Contact spring according to Claim 2, **characterized in that** the clamping section (24) of the respective contact bow (22) is connected on both sides to the central region (19) via lateral connecting sections (25) which run approximately perpendicular to the central region (19) of the contact spring (10).

4. Contact spring according to one of Claims 1 to 3, **characterized in that** the respective contact lug (20, 21) acts with one end on the central region (19) of the contact spring (10), the respective contact lug (20, 21) protruding at an angle with respect to the central region (19) starting from this end, and an opposite, free end of the respective contact lug (20, 21), together with the contact bow (22), defining the respective receiving and contact region (23).

5. Contact spring according to one of Claims 1 to 4, **characterized in that** the first connection element (13) which is formed at the first end (11) of the contact spring, and the second connection element (14), which is formed at the second end (12) of the contact spring are each in the form of insulation displacement contacts (IDCs), which differ from one another in terms of the design of their IDC clamping limbs (15, 16) the IDC clamping limbs (15) of the first connection element (13) and the IDC clamping limbs (16) of the second connection element (14) preferably having different lengths and/or the IDC clamping limbs (15) of the first connection element and the IDC clamping limbs (16) of the second connection element each being spread differently relative to one another and each being bent back differently relative to the central region of the contact spring.

6. Contact spring according to one of Claims 1 to 5, **characterized by** a plurality of, in particular two, contact lugs (20, 21), with a contact bow (22) being formed exclusively adjacent to one contact lug (20).

7. Contact spring according to Claim 6, **characterized in that** a first contact lug (20) is used for connecting an overvoltage protection device, and a second contact lug (21) is used for connecting a test device or a measuring device or a switchover device, with one contact bow (22) being formed exclusively adjacent to the first contact lug (20), the two contact lugs (20, 21) preferably being spaced apart from one another in such a way that the first contact lug (20) is positioned adjacent to the first connection element (13) and the second contact lug (21) is positioned adjacent to the second connection element (14), with the first connection element (13) being used for connecting cable cores of a system cable and the second connection element (14) being used for connecting cable cores of a jumper cable or a subscriber cable.

8. Contact spring according to one of Claims 1 to 5, **characterized by** a plurality of, in particular two, contact lugs (20, 21), with in each case one contact bow (22) being formed adjacent to each contact lug or with a common contact bow (22) being formed adjacent to the contact lugs (20, 21).

9. Contact spring according to one of Claims 1 to 8, **characterized in that** said contact spring is formed completely, i.e. on both connection elements (13, 14), in the central region (19), on the or each contact lug (20, 21) and on the or each contact bow (22), from a metallic material.

## Revendications

1. Ressort de contact (10) d'un dispositif de répartition d'un équipement de télécommunication, comprenant un premier élément de raccordement (13), formé à une première extrémité (11) du ressort de contact, notamment réalisé sous la forme d'un contact à borne guillotine, pour le raccordement des brins de câble arrivants ou partants d'un câble d'abonné ou d'un câble de système ou d'un câble de connexion, comprenant un deuxième élément de raccordement (14), formé à une deuxième extrémité (12) du ressort de contact, notamment réalisé sous la forme d'un contact à borne guillotine, pour le raccordement des brins de câble partants ou arrivants d'un câble d'abonné ou d'un câble de système ou d'un câble de connexion, et comprenant au moins une lame de contact (20, 21) exposée dans une zone centrale (19) du ressort de contact, laquelle est positionnée entre les deux éléments de raccordement (13, 14), pour le raccordement d'un dispositif, notamment d'un dispositif de protection contre les surtensions ou d'un dispositif de test ou d'un dispositif de mesure ou d'un dispositif de permutation, un étrier de contact (22) étant formé en juxtaposition d'au moins une lame de contact (20, 21) exposée, lequel entoure au moins partiellement la lame de contact (20, 21) correspondante, **caractérisé en ce que** l'étrier de contact (22) correspondant forme avec la lame de contact (20, 21) correspondante une zone d'accueil et de contact (23) pour une portion du dispositif à mettre en contact avec la lame de contact (20, 21) correspondante et/ou l'étrier de contact (22) correspondant.

2. Ressort de contact selon la revendication 1, **caractérisé en ce que** la zone d'accueil et de contact (23) correspondante est définie par la lame de contact (20, 21) correspondante et une portion de serrage (24) de l'étrier de contact (22) correspondant qui s'étend approximativement en parallèle avec la zone centrale (19) du ressort de contact (10).

3. Ressort de contact selon la revendication 2, **caractérisé en ce que** la portion de serrage (24) de l'étrier de contact (22) correspondant est reliée des deux côtés avec la zone centrale (19) par des portions de liaison latérales (25) qui s'étendent approximativement perpendiculairement à la zone centrale (19) du ressort de contact (10).

4. Ressort de contact selon l'une des revendications 1 à 3, **caractérisé en ce que** la lame de contact (20, 21) correspondante vient en prise avec une extrémité sur la zone centrale (19) du ressort de contact (10), la lame de contact (20, 21) correspondante étant exposée en biais par rapport à la zone centrale (19) en partant de cette extrémité, et une extrémité opposée libre de la lame de contact (20, 21) correspondante définissant conjointement avec l'étrier de contact (22) la zone d'accueil et de contact (23) correspondante.

5. Ressort de contact selon l'une des revendications 1 à 4, **caractérisé en ce que** le premier élément de raccordement (13) formé à la première extrémité (11) du ressort de contact et le deuxième élément de raccordement (14) formé à la deuxième extrémité (12) du ressort de contact sont respectivement réalisés sous la forme de contacts à borne guillotine autodénudante, lesquels se différentient du point de vue de l'exécution de leur branche de borne autodénudante (15, 16), la branche de borne autodénudante (15) du premier élément de raccordement (13) et la branche de borne autodénudante (16) du deuxième élément de raccordement (14) étant de préférence réalisées avec des longueurs différentes et/ou la branche de borne autodénudante (15) du premier élément de raccordement et la branche de borne autodénudante (16) du deuxième élément de raccordement étant respectivement écartées différemment l'une par rapport à l'autre et présentant respectivement un angle différent par rapport à la zone centrale du ressort de contact.

6. Ressort de contact selon l'une des revendications 1 à 5, **caractérisé par** plusieurs, notamment deux lames de contact (20, 21), un étrier de contact (22) étant exclusivement formé en juxtaposition d'une lame de contact (20).

7. Ressort de contact selon la revendication 6, **caractérisé en ce qu'**une première lame de contact (20) sert au raccordement d'un dispositif de protection contre les surtensions et une deuxième lame de contact (21) au raccordement d'un dispositif de test ou d'un dispositif de mesure ou d'un dispositif de permutation, un étrier de contact (22) étant exclusivement formé en juxtaposition de la première lame de contact (20), les deux lames de contact (20, 21) étant de préférence espacées l'une de l'autre de telle sorte que la première lame de contact (20) est positionnée en juxtaposition du premier élément de raccordement (13) et la deuxième lame de contact (21) en juxtaposition du deuxième élément de raccordement (14), le premier élément de raccordement (13) servant au raccordement des brins de câble d'un câble de système et le deuxième élément de raccordement (14) au raccordement des brins de câble d'un câble de connexion ou d'un câble d'abonné.

8. Ressort de contact selon l'une des revendications 1 à 5, **caractérisé par** plusieurs, notamment deux lames de contact (20, 21), un étrier de contact (22) étant respectivement formé en juxtaposition de chaque lame de contact ou un étrier de contact (22) commun étant formé en juxtaposition des lames de contact (20, 21).

9. Ressort de contact selon l'une des revendications 1 à 8, **caractérisé en ce que** celui-ci est intégralement constitué d'un matériau métallique, c'est-à-dire au niveau des deux éléments de raccordement (13, 14), dans la zone centrale (19), au niveau de la ou de chaque lame de contact (20, 21) ainsi qu'au niveau du ou de chaque étrier de contact (22).
